# DEMANDE DE BREVET EUROPEEN

(11) **EP 2 468 382 A1**
(43) Date de publication de la demande: **27.06.2012**
(21) Numéro de dépôt: 11195179.4
(22) Date de dépôt: 22.12.2011
(51) Int. Cl.: B01D 46/24

(54) **Filtre a particules du type assemble**

(30) Priorité: 23.12.2010 FR 1061156
(71) Demandeur: Saint-Gobain Centre de Recherches et d'Etudes Européen, 92400 Courbevoie (FR)
(72) Inventeur: Bouteiller, Bernard, 84800 ISLE SUR LA SORGUE (FR)
(74) Mandataire: Lucas, Francois

(57) **Abrégé**

L'invention se rapporte à un filtre pour le traitement d'un gaz chargé en particules de suies et de polluants en phase gazeuse, comprenant une pluralité de blocs monolithiques en nid d'abeille reliés entre eux par un ciment de joint dont la conductivité thermique est supérieure à 0,1 W/m.K, ledit filtre se caractérisant en ce qu'au moins un bloc monolithique placé dans la partie centrale du filtre, de préférence l'ensemble des blocs monolithiques, présentent suivant une direction radiale une portion centrale dont la capacité calorifique est supérieure à la capacité calorifique d'une portion périphérique de même volume du ou desdits blocs, et en ce que, si on définit :
- Rc comme le ratio entre la surface d'ouverture sur le front avant de ladite portion centrale et la surface spécifique de filtration de ladite portion centrale et
- Rp comme le ratio entre la surface d'ouverture sur le front avant de ladite portion périphérique et la surface spécifique de filtration de ladite portion périphérique, le rapport Rc/Rp est compris entre 0,9 et 1,1.

## Description

L'invention se rapporte au domaine des filtres à particules notamment utilisés dans une ligne d'échappement d'un moteur pour l'élimination des suies produites par la combustion d'un carburant diesel dans un moteur à combustion interne, incorporant éventuellement une composante lui conférant des propriétés catalytiques d'élimination des composés polluants gazeux CO, NOₓ, hydrocarbures imbrûlés.

Les structures de filtration pour les suies contenues dans les gaz d'échappement de moteur à combustion interne sont bien connues de l'art antérieur. Ces structures présentent le plus souvent une structure en nid d'abeille, une des faces de la structure permettant l'admission des gaz d'échappement à filtrer et l'autre face l'évacuation des gaz d'échappement filtrés. La structure comporte, entre les faces d'admission et d'évacuation, un ensemble de conduits ou canaux adjacents d'axes parallèles entre eux séparés par des parois poreuses de filtration, lesquels conduits sont obturés à l'une ou l'autre de leurs extrémités pour délimiter des chambres d'entrée s'ouvrant suivant la face d'admission et des chambres de sortie s'ouvrant suivant la face d'évacuation. Pour une bonne étanchéité, la partie périphérique de la structure est le plus souvent entourée d'un ciment de revêtement. Les canaux sont alternativement obturés dans un ordre tel que les gaz d'échappement, au cours de la traversée du corps en nid d'abeille, sont contraints de traverser les parois latérales des canaux d'entrée pour rejoindre les canaux de sortie. De cette manière, les particules ou suies se déposent et s'accumulent sur les parois poreuses du corps filtrant. Le plus souvent, les corps filtrants sont en matière céramique poreuse, par exemple en cordiérite ou en carbure de silicium.

De façon connue, durant sa mise en oeuvre, le filtre à particules est soumis à une succession de phases de filtration (accumulation des suies) et de régénération (élimination des suies). Lors des phases de filtration, les particules de suies émises par le moteur sont retenues et se déposent à l'intérieur du filtre. Lors des phases de régénération, les particules de suie sont brûlées à l'intérieur du filtre, afin de lui restituer ses propriétés de filtration. La structure poreuse est alors soumise à des contraintes thermo-mécaniques intenses, qui peuvent entraîner des micro-fissurations susceptibles sur la durée d'entraîner une perte sévère des capacités de filtration de l'unité, voire sa désactivation complète. Ce phénomène est particulièrement observé sur des filtres monolithiques de grand diamètre. Il a en effet été observé, en fonctionnement dans une ligne d'échappement, que le gradient thermique entre le centre et la périphérie de telles structures, lors des phases de régénération, est d'autant plus élevé que les dimensions du monolithe sont importantes. Un tel gradient de température, peut être très élevé (plus de 100°C/cm).

Pour résoudre ces problèmes et augmenter la durée de vie des filtres, il a été proposé plus récemment des structures de filtration associant plusieurs blocs ou éléments monolithiques en nid d'abeille. Les éléments sont le plus souvent assemblés entre eux par collage au moyen d'une colle ou d'un ciment de nature céramique, appelés dans la suite de la description ciment de joint. Des exemples de telles structures filtrantes sont par exemple décrits dans les demandes de brevets EP 816 065, EP 1 142 619, EP 1 455 923, WO 2004/090294 ou encore WO 2005/063462. Afin d'assurer une meilleure relaxation des contraintes dans une structure assemblée, il est connu que les coefficients de dilatation thermique des différentes parties de la structure (éléments de filtration, ciment de revêtement, ciment de joint) doivent être sensiblement du même ordre. De ce fait, lesdites parties sont avantageusement synthétisées sur la base d'un même matériau, le plus souvent le carbure de silicium SiC ou la cordiérite. Ce choix permet en outre d'homogénéiser la répartition de la chaleur lors de la régénération du filtre. Par l'expression « à la base d'un même matériau », on entend au sens de la présente description que le matériau est constitué d'au moins 25% poids, de préférence d'au moins 45% poids et de manière très préférée d'au moins 70% poids dudit matériau. Au sens de la présente invention, le choix d'utiliser un même matériau de base pour les différentes parties du filtre ne doit cependant pas être considéré comme le seul mode avantageux et d'autres mises en oeuvre comprenant notamment l'association de différents matériaux sont également comprises dans le cadre de la présente invention.

Cependant, même au sein de telles structures assemblées, bien qu'il soit minimisé, le problème du gradient thermique entre le centre et la périphérie des blocs filtrants se pose encore, notamment pour les blocs filtrants situés au centre du filtre assemblé, dans un plan transversal perpendiculaire à son axe principal.

Une solution envisagée par la demande de brevet US2005/0235622 pour améliorer encore la résistance thermomécanique du filtre consiste à maximiser la capacité calorifique du filtre en son centre en y concentrant plus de matière (principe de masse thermique). Le résultat est obtenu en ménageant une épaisseur de paroi et/ou une densité de canaux supérieure(s) dans une zone centrale du filtre, selon une direction axiale, par référence à celle(s) caractérisant une zone périphérique.

Si le gradient de température est effectivement réduit par l'application d'un tel principe, limitant ainsi les risques de destruction du filtre au cours de son utilisation, il a été découvert par la société demanderesse, et c'est là l'objet de la présente invention, qu'il était possible de prolonger encore la durée de vie et les performances sur le long terme des structures ainsi produites. En particulier, il a été trouvé que dans les structures décrites dans la demande de brevet US2005/0235622, se produisait, tout au long de la vie du filtre en fonctionnement, une distribution non uniforme des résidus dans les canaux d'entrée de la structure poreuse. Par résidus, on entend au sens de la présente invention les produits imbrulés (et imbrûlables), de nature minérale, qui s'accumulent, lors des régénérations successives, principalement à la surface mais également à l'intérieur des canaux d'entrée, en particulier à proximité de la face (aval) de sortie des gaz.

De manière connue et tel que décrit par exemple dans les documents de référence SAE 2004-01-0950 et SAE 2004-01-0158, ces résidus contribuent dans une large mesure, au fur et à mesure des régénérations successives, d'une part à augmenter la perte de charge du filtre en service et d'autre part à diminuer le volume utile des canaux d'entrée. De façon connue et tel que décrit dans ces publications, ces résidus s'accumulent lors des phases régénératives dans la partie aval du filtre selon le sens de traversée des gaz, notamment à la surface des parois poreuses des canaux d'entrée, et plus particulièrement en fond de filtre jusqu'à obturer entièrement ladite partie aval des canaux d'entrée. Une telle obturation peut notamment se produire sur une part importante de la surface de filtration de la partie aval des parois, comme il pu être notamment mesuré par des techniques de tomographie décrites dans la publication SAE 2004-01-0158.

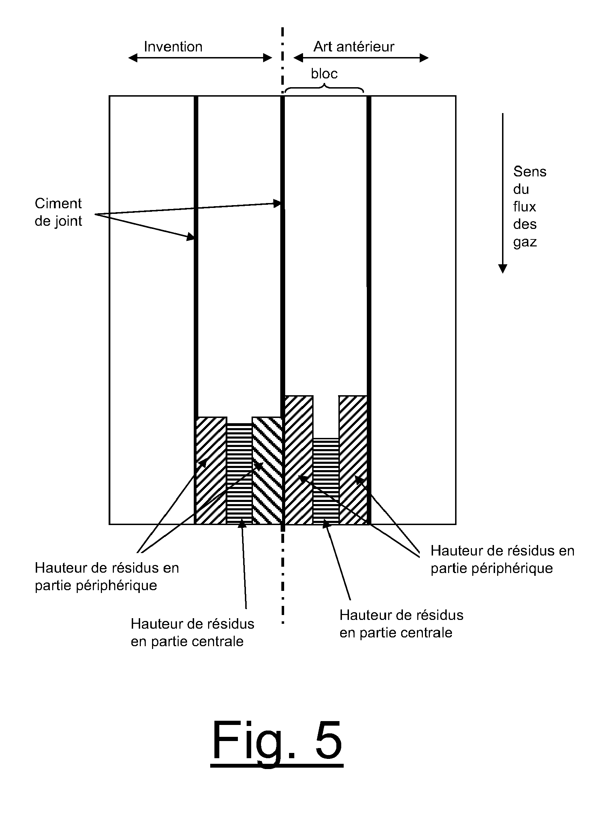

Dans un filtre usagé, c'est-à-dire un filtre dans sa seconde moitié de vie, dans les filtres conformes à l'enseignement du document US2005/0235622, il a ainsi pu être observé par la demanderesse que cette distribution était très hétérogène, c'est-à-dire que la partie aval des canaux (c'est-à-dire proche de la face de sortie des gaz) présente une répartition des résidus très différente entre une portion centrale et une portion périphérique du filtre, dans le plan de section du filtre, comme il est indiqué schématiquement sur la figure 5 ci-jointe.

Tout particulièrement, dans un filtre formé par assemblage de blocs monolithiques filtrants, une répartition trop hétérogène dans un seul des blocs filtrants constitutifs peut entraîner sa détérioration rapide et la nécessité de remplacer l'ensemble du filtre.

En particulier, au niveau des blocs centraux dans l'assemblage, le schéma possible suivant pourrait expliquer les fissurations observées sur des filtres usagés : Lors de la combustion des suies, la chaleur produite par la combustion est préférentiellement évacuée par les gaz de combustion traversant les parois filtrantes. Le transfert de chaleur à travers les zones des parois du filtre chargées en résidus (moins perméables au gaz) étant faible, une différence de température se créée entre la zone chargée en résidus et les zones adjacentes chargées en suies. Lorsque la vitesse de combustion des suies est maximale, c'est-à-dire lorsque l'embrasement des suies est le plus fort, le gradient thermique entre la portion comprenant majoritairement des suies et la portion comprenant majoritairement des résidus imbrûlables est alors localement très élevé. Ce phénomène est responsable de contraintes thermiques qui conduisent aux fissures locales observées sur des filtres usagés (voir même à la perte d'intégrité du filtre). Ce phénomène est très dommageable car il affecte la fiabilité et la durée de vie des filtres en particulier dans la deuxième partie de leur durée de fonctionnement garantie. De tels phénomènes ont été tout particulièrement observés par la demanderesse lorsqu'une partie aval du filtre supérieure ou égale à 10% de sa longueur du filtre est majoritairement obstruée par des résidus de combustion. Ce phénomène est classiquement observé après au moins 50 cycles de régénération.

La demande WO 2007/088307 décrit également un filtre du type assemblé à partir de blocs monolithiques dans lequel la densité de canaux est variable entre une portion centrale et une portion périphérique.

La demande WO 2005/016491 décrit en outre des blocs filtrants et des structures assemblées obtenues avec de tels blocs, dans lesquelles les parois sont ondulées.

Dans sa forme la plus générale, la présente invention se rapporte à un filtre pour le traitement d'un gaz chargé en particules de suies et de polluants en phase gazeuse, comprenant une pluralité de blocs monolithiques en nid d'abeille reliés entre eux par un ciment de joint dont la conductivité thermique est supérieure à 0,1 W/m.K, de préférence supérieure à 0,3 W/m.K, lesdits blocs comprenant un ensemble de canaux adjacents d'axes parallèles entre eux séparés par des parois poreuses, lesquels canaux étant obturés par des bouchons à l'une ou l'autre de leurs extrémités pour délimiter des conduits d'entrée s'ouvrant suivant une face d'admission des gaz et des conduits de sortie s'ouvrant suivant une face d'évacuation des gaz, de telle façon que le gaz traverse les parois poreuses, ledit filtre se caractérisant en ce qu'au moins un bloc monolithique placé dans la partie centrale du filtre, de préférence l'ensemble des blocs monolithiques, présentent suivant une direction radiale une portion centrale dont la capacité calorifique est supérieure à la capacité calorifique d'une portion périphérique de même volume du ou desdits blocs, et en ce que, si on définit :
- **R_{c}** comme le ratio entre la surface d'ouverture sur le front avant de ladite portion centrale et la surface spécifique de filtration de ladite portion centrale et
- **Rₚ** comme le ratio entre la surface d'ouverture sur le front avant de ladite portion périphérique et la surface spécifique de filtration de ladite portion périphérique,
le rapport **R_{c}/Rₚ** est compris entre 0,9 et 1,1, de préférence entre 0,95 et 1,05, voire sensiblement égal à 1.

Au sens de la présente invention, lesdites portions sont bien entendu choisies en dehors des zones du bloc incorporant ses parois externes.

Bien évidemment, lesdites portions périphérique et centrale, pour être comparables, présentent une taille similaire, c'est-à-dire un volume identique. En outre, au sens de la présente invention ladite portion comprend une pluralité de canaux (c'est-à-dire au moins 2), en particulier au moins un canal d'entrée et au moins un canal de sortie, pour être représentative de la zone du bloc considérée.

Au sens de la présente description, on entend par surface d'ouverture sur le front avant (appelé dans la suite de description OFA pour « open front area » en anglais), le rapport, en pourcentage, de l'aire couverte par la somme des sections transversales des canaux d'entrée sur la face avant de la portion de bloc monolithique unitaire considérée, hormis les parois, sur l'aire totale de la section transversale correspondante de ladite portion.

Classiquement et au sens de la présente description, la surface spécifique de filtration d'un canal ouvert sur la face d'entrée est définie comme le produit du périmètre interne dudit canal d'entrée par la longueur du filtre.

Par surface spécifique de filtration d'une portion d'un bloc monolithique (SF), on entend par analogie au sens de la présente invention la somme cumulée des surfaces de filtration des canaux ouverts sur la face d'entrée, comprises dans l'élément de volume constituant ladite portion, et permettant la filtration des gaz entrants dans ladite portion. Ladite surface spécifique d'une portion est selon l'invention exprimée en m² et est rapportée au volume en litre (dm³) de la portion considérée de filtre.

Au sens de la présente description on entend par WALL, le rapport, en pourcentage et selon une coupe transversale, entre la surface occupée par l'ensemble des parois internes de la portion considérée (hormis les bouchons) et l'aire totale de la portion considérée.

Sur un bloc dont les parois sont à base du même matériau et présentent sensiblement la même porosité, la capacité calorifique volumique de chaque portion dudit bloc peut être estimée de manière simple par référence à la valeur du WALL définie géométrique telle que précédemment décrite car elle y est directement proportionnelle.

Au sens de la présente description, on entend par surface d'ouverture sur le front arrière (appelé dans la suite de description OBA pour « open back area » en anglais), le rapport, en pourcentage, de l'aire couverte par la somme des sections transversales des canaux de sortie (bouchés sur la face avant) de la portion de bloc monolithique unitaire considérée, hormis les parois, sur l'aire totale de la section transversale correspondante de ladite portion.

Au sens de la présente description, on entend par ratio d'asymétrie « Ra » de la portion de bloc monolithique unitaire le rapport de son OFA sur son OBA.

Un tel filtre présente l'avantage d'une très bonne fiabilité, tout particulièrement en seconde partie de la durée de vie attendue du filtre. Tel que précédemment décrit, cette fiabilité accrue est le résultat d'une répartition des résidus particulièrement homogène au sein des filtres usagés répondant aux critères selon la présente invention.

Le critère d'homogénéité de répartition des résidus est typiquement mesuré par la différence relative de longueur moyenne de dépôt de résidus en fond de filtre.

Le filtre est coupé au centre des unités, la hauteur de résidus est mesurée pour chaque canal de chaque portion selon les techniques classiques (tomographie).

Il est bien entendu que selon l'invention, cette meilleure répartition est obtenue sans remettre en cause les objectifs autrement classiquement recherchés pour le filtre, à savoir, pour des régimes moteurs équivalents, le meilleur compromis possible entre les propriétés suivantes :
- une faible perte de charge occasionnée par la structure filtrante en fonctionnement, c'est-à-dire typiquement lorsque celle-ci est dans une ligne d'échappement d'un moteur à combustion interne, aussi bien lorsque que ladite structure est exempte de particules de suies (perte de charge initiale) que lorsqu'elle est chargée en particules,
- une augmentation de la perte de charge du filtre au cours dudit fonctionnement la plus faible possible, c'est à dire un faible accroissement de la perte de charge en fonction du niveau de chargement en suies du filtre,
- une surface totale de filtration élevée,
- un volume de stockage de suies important, notamment à perte de charge constante, de manière à réduire la fréquence de régénération,
- un volume de stockage des résidus plus important,
- durée moyenne plus élevée entre deux régénérations successives.

Il est possible selon l'invention d'agir sur et de modifier la forme des canaux en coupe transversale, entre la périphérie et le centre des blocs en modifiant au moins l'un des paramètres suivants, tout type de géométrie pouvant par ailleurs être envisagé selon l'invention:
- la densité de canaux : dans ce cas par exemple, on peut ainsi adapter l'épaisseur des parois et le ratio d'asymétrie Ra (si la structure est asymétrique dans au moins une portion) afin d'obtenir un ratio OFA/Surface spécifique de filtration sensiblement identique pour les deux portions,
- le ratio d'asymétrie Ra, dans le cas de parois ondulées : dans ce cas par exemple, on peut adapter la densité de canaux et/ou les épaisseurs de paroi afin d'obtenir un ratio OFA/Surface spécifique de filtration sensiblement identique pour les deux portions,
- l'épaisseur des parois : dans ce cas par exemple, on peut adapter la densité de canaux et/ou le ratio d'asymétrie Ra afin d'obtenir un ratio OFA/Surface spécifique de filtration sensiblement identique pour les deux portions,
- le rayon de courbure aux coins des canaux d'entrée et/ou de sortie,
- la géométrie des canaux en coupe transversale, en fonction du nombre de parois les constituants (canaux de section triangulaire, carrée, hexagonale, octogonale).

Selon un premier mode de réalisation de la présente invention, la densité des canaux de la portion périphérique des blocs est sensiblement la même que celle de la densité des canaux de la portion centrale des blocs. De préférence dans ce cas, l'épaisseur des parois des canaux de la portion centrale des blocs est supérieure à l'épaisseur des parois des canaux de la portion périphérique des blocs et/ou le ratio d'asymétrie (Ra = OFA/OBA) de la portion centrale est supérieur au ratio d'asymétrie de la portion périphérique, les deux ratios d'asymétrie étant ajustés de telle façon que le rapport Rc/Rp soit sensiblement constant entre lesdites portions centrales et périphériques. Cette configuration apparaît relativement facile à mettre en oeuvre en terme de procédé d'obtention car elle n'implique pas d'écart sensible de friction au travers de la filière d'extrusion utilisée pour l'obtention des blocs crus, susceptible de générer des défauts internes dans le bloc filtrant final. Ce mode de réalisation permet d'obtenir par ailleurs une surface de paroi filtrante (entre canaux entrée et de sortie) maximale.

Selon un second mode de réalisation, la densité de canaux de la portion centrale du ou desdits blocs est supérieure à la densité de canaux de la portion périphérique du ou desdits blocs. Selon ce mode, l'épaisseur de paroi est par exemple sensiblement constante dans tout le volume du ou desdits blocs et le ratio d'asymétrie Ra des parois de la portion centrale du ou desdits blocs est supérieur au ratio d'asymétrie Ra des parois de la portion périphérique, les deux ratios d'asymétrie étant ajustés de telle façon que le rapport Rc/Rp soit sensiblement constant entre lesdites portions centrales et périphériques.

Selon un mode de réalisation de l'invention, le rapport de l'OFA sur la surface spécifique de filtration de chaque portion multiplié par 1000 est compris entre 0,2 à 0,7%/m²/litre.

Selon un mode de réalisation de l'invention, le rapport de la surface spécifique de filtration de la portion périphérique sur la surface spécifique de filtration de la portion centrale est compris entre 0,3 à 3.

Selon un mode possible de réalisation, au moins une desdites portions présente, en coupe transversale, une ondulation, de telle façon que le taux d'asymétrie desdites parois, tel que défini dans la demande WO 2005/016491 et calculé comme le rapport entre la demi-longueur ou la demi-période sur l'amplitude maximale de ladite ondulation, soit compris entre 10% et 35%.

De préférence les deux portions présentent des parois filtrantes réalisées avec le même matériau, la différence de capacité calorifique (de masse thermique) étant liée à des variations de forme des canaux (telle que densité, épaisseur, géométrie, ration d'asymétrie comme expliqué précédemment). La porosité ou la densité apparente du matériau constituant les parois filtrantes est de préférence la même pour les deux portions de bloc filtrant.

En général, les parois filtrantes des blocs constitutifs sont formés dans un matériau choisi parmi le carbure de Silicium, la cordiérite, l'alumine, le titanate d'aluminium, la mullite, le nitrure de silicium, les métaux frittés, un mélange silicium/carbure de silicium, ou l'un quelconque de leurs mélanges.

Notamment lesdits blocs et le ciment de joint peuvent être à base d'un même matériau céramique, préférentiellement à base de carbure de silicium SiC.

Typiquement, le ciment de joint présente une conductivité thermique comprise entre 0,3 et 20 W/m.K de préférence entre 1 et 5 W/m.K.

Selon un mode possible, le ou les blocs filtrants comprennent deux zones distinctes de canaux, avantageusement concentriques, présentant des caractéristiques de densité de canaux et/ou d'OFA et/ou de WALL et/ou de ratio d'asymétrie différents, ladite portion centrale étant comprise dans ladite première zone et ladite portion périphérique étant comprise dans ladite seconde zone.

De préférence, la surface de la zone centrale représente entre 5 et 80% de la section du bloc filtrant dans le plan transversal, de préférence entre 7% à 75%, voire entre 10 à 70%.

Par exemple, la capacité calorifique volumique entre les portions centrale et périphérique varie dans un rapport de préférence entre 1,05 et 2,0.
Typiquement, selon ce mode, le rapport de la surface d'une zone centrale sur la surface d'une zone périphérique est compris entre 0,05 et 4.

Selon un autre mode possible de réalisation de l'invention, l'augmentation de la capacité calorifique peut être graduelle de la périphérie vers le centre du ou desdits blocs.

L'invention sera mieux comprise à la lecture de la description de différents modes de réalisations de l'invention qui suivent, respectivement illustrés par les figures 1 à 4.
La figure 1 schématise une vue de la face amont d'un bloc ou élément monolithique constitutif d'un filtre assemblé conforme à l'enseignement de la publication WO 2007/088307.
La figure 2 schématise une vue de la face amont d'un bloc ou élément monolithique constitutif d'un filtre assemblé conforme à l'enseignement de la publication US 2005/235622.
La figure 3 schématise une vue de la face amont d'un bloc ou élément monolithique constitutif d'un filtre assemblé selon conforme à l'enseignement de la publication WO 2005/016491.
La figure 4 représente une vue de la face amont d'un bloc ou élément monolithique constitutif d'un filtre assemblé selon un mode de réalisation de l'invention.
   Dans les représentations des figures 3 et 4, les bouchons n'ont pas été représentés pour ne pas nuire à leur clarté.
La figure 5 représente une vue schématique de la répartition des résidus au niveau des parois des différents filtres obtenus dans les exemples qui suivent, sur la base des résultats observés et reportés dans le tableau 2 qui suit.

De façon connue, le filtre assemblé est obtenu par assemblage de blocs monolithiques représenté sur les figures jointes. Les blocs monolithiques sont eux-mêmes obtenus par extrusion d'une pâte meuble, par exemple en carbure de silicium, pour former une structure poreuse en nid d'abeille.

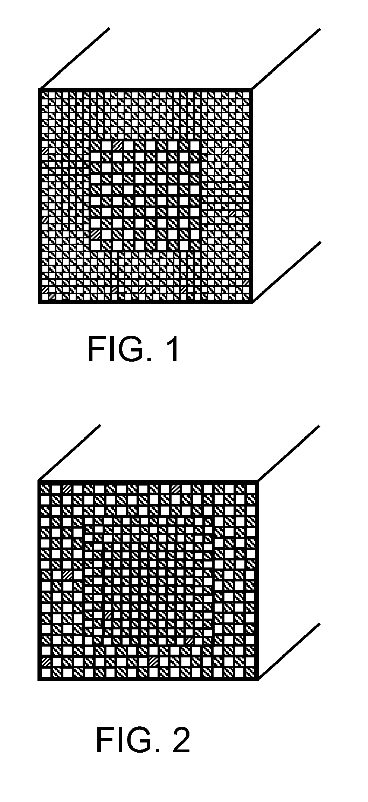

Sans que cela puisse être considéré comme restrictif, la structure poreuse extrudée sous forme de blocs monolithiques (figures 1 à 4) a la forme d'un parallélépipède rectangle s'étendant selon un axe longitudinal entre deux faces amont et aval sensiblement carrées sur lesquelles débouchent une pluralité de canaux adjacents, rectilignes et parallèles à l'axe longitudinal. Les structures poreuses extrudées sont alternativement bouchées sur leur face amont ou sur leur face aval par des bouchons amont et aval, pour former respectivement des canaux de sortie et des canaux d'entrée. Chaque canal définit ainsi une surface intérieure ou interne de filtration délimité par les parois latérales, un bouchon d'obturation disposé soit sur la face amont, soit sur la face aval et une ouverture débouchant alternativement et respectivement soit sur la face aval soit sur la face amont, de telle façon que les canaux d'entrée et de sortie sont en communication de fluide par les parois poreuses.

Les blocs monolithes sont assemblés entre eux par collage au moyen d'un ciment de joint de nature céramique, par exemple également à base de carbure de silicium, en une structure de filtration ou filtre assemblé. L'assemblage ainsi constitué peut être ensuite usiné pour prendre, par exemple, une section ronde ou ovoïde, puis recouvert d'un ciment de revêtement. Il en résulte un filtre assemblé apte à être inséré dans une ligne d'échappement, selon des techniques bien connues. En fonctionnement, le flux des gaz d'échappement entre dans le filtre par les canaux d'entrée, puis traverse les parois latérales filtrantes de ces canaux pour rejoindre les canaux de sortie.

Les figures 1 à 4 illustrent différents modes possibles réalisation d'un bloc comprenant deux zones distinctes.

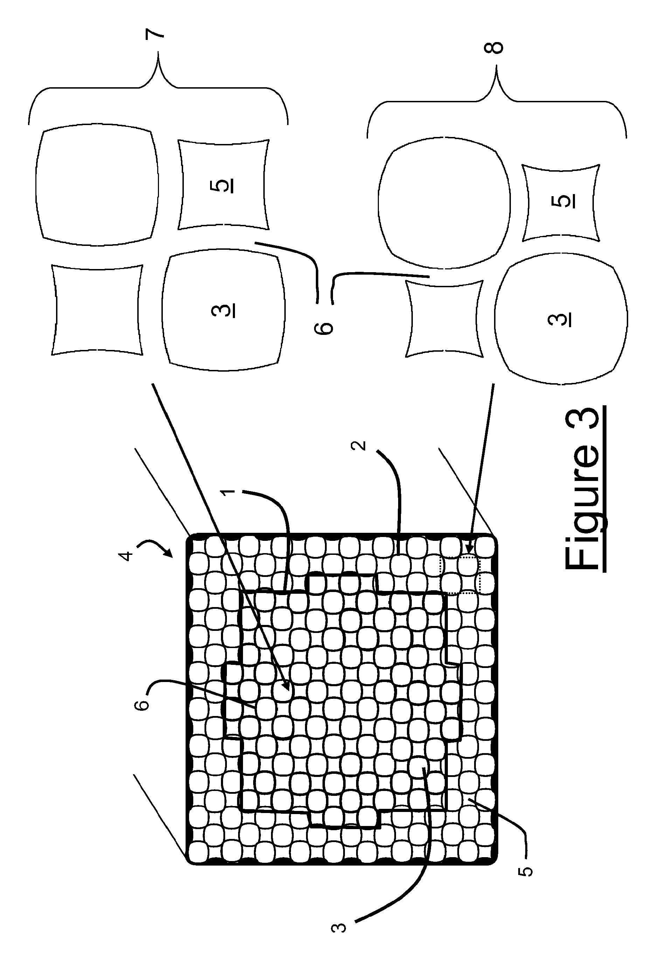

Selon le mode illustré par la figure 1, conforme à l'enseignement de la demande WO 2007/088307 (figure 3), la densité de canaux, de section sensiblement carrée, d'un bloc monolithe est variable entre la partie centrale et la partie périphérique. Le bloc monolithe comprend classiquement une partie centrale caractérisée par une première densité de canaux par unité de surface et une partie périphérique caractérisée par une deuxième densité de canaux par unité de surface, supérieure à celle de la partie centrale. Dans ce mode, la capacité calorifique de la portion centrale est supérieure à celle de la portion périphérique et les ratios OFA/SF sont différents entre les portions centrales et périphériques du filtre.

Selon le mode illustré par la figure 2, conforme à l'enseignement de la demande US 2005/235622 (figure 3), la densité des canaux d'un bloc monolithe est également variable entre la partie centrale et la partie périphérique, mais cette fois la densité de canaux par unité de surface de la partie centrale est supérieure à celle de la partie périphérique. Dans ce mode la capacité calorifique de la portion centrale est supérieure à celle de la portion périphérique et les ratios OFA/SF sont différents entre les portions centrales et périphériques du filtre.

Selon le mode illustré par la figure 3, conforme à l'enseignement de la demande WO 2005/016491, les parois de filtration ne sont plus droites mais présente une ondulation périodique dans le plan de coupe transversal, tel qu'illustré par la figure 3. Selon ce mode, les éléments de paroi se succèdent, en coupe transversale et en suivant un rang horizontal et vertical de canaux, pour définir une forme sinusoïdale ou en vague (wavy en anglais). Dans ce mode, la capacité calorifique de la portion centrale est également supérieure à celle de la portion périphérique mais les ratios OFA/SF ne sont pas égaux entre les portions centrales et périphériques du filtre.

Sur la figure 3 représentée, le bloc 4 comprend une zone centrale 1 et une zone périphérique 2 constituées par des canaux d'entrée 3 et des canaux de sortie 5 présentant une section dont la forme est conforme à l'enseignement de la demande WO 2005/016491. Selon ce mode, les éléments de paroi 6 séparant les canaux d'entrée 3 et les canaux de sortie 5 se succèdent, en coupe transversale et en suivant un rang horizontal ou vertical de canaux, pour définir une forme sinusoïdale ou ondulée (wavy en anglais), dans la zone centrale et dans la zone périphérique du bloc 4. Les éléments de paroi 6 ondulent d'une demi-période de sinusoïde sur la largeur d'un canal. Dans ce mode selon la figure 3, la densité de canaux est identique dans les zones centrale et périphérique mais les épaisseurs de paroi et le ratio d'asymétrie (OFA/OBA) sont différents d'une zone à l'autre, de telle façon que la capacité calorifique d'une portion centrale 7, sélectionnée dans ladite zone centrale dudit bloc, est supérieure à la capacité calorifique d'une portion périphérique 8 de même taille (de même volume), mais sélectionnée cette fois dans la zone périphérique dudit bloc. Dans ce mode non conforme à la présente invention, les ratios OFA/SF desdites portions périphériques et centrales ne sont pas égaux (voir tableau 1 qui suit).

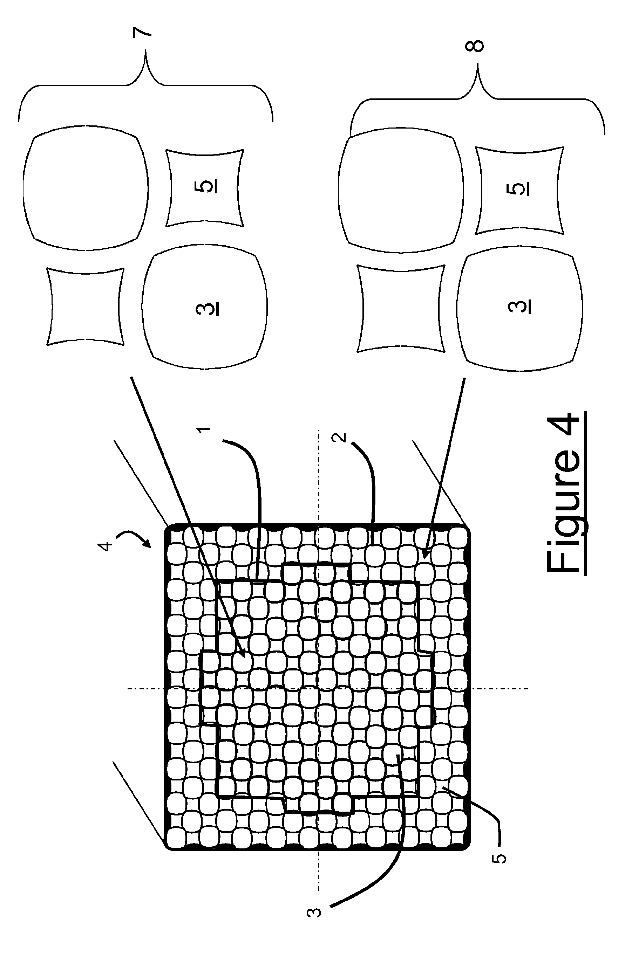

Dans le mode de réalisation illustré par la figure 4, conforme à la présente invention, la densité de canaux est également maintenue constante dans tout le volume du filtre. De même que dans le mode de réalisation illustré par la figure 3, les épaisseurs des parois des zones (ou des portions) périphériques et centrales sont différentes. A la différence cependant du mode selon la figure 3, les parois présentent une ondulation différente entre la périphérie et le centre du filtre, de telle façon que, conformément à la présente invention, les ratios OFA/SF des portions périphériques et centrales soient sensiblement égaux, tel que reporté dans le tableau 1 et 2 qui suivent.

Les avantages liés à la mise en oeuvre de l'invention sont illustrés par les exemples qui suivent, bien évidemment non limitatifs, dans lesquels les propriétés respectives des structures illustrées par les figures 1 à 4 précédemment décrites ont été mesurées et comparées.

### Exemple 1 (selon WO 2007/088307):

On a synthétisé selon les techniques de l'art, par exemple décrites dans les brevets EP 816 065, EP 1 142 619, EP 1 455 923 ou encore WO 2004/090294, une première population d'éléments monolithiques ou monolithes en forme de nid d'abeille et en carbure de silicium.

Pour ce faire, de manière comparable au procédé décrit dans la demande EP 1 142 619, on mélange dans un premier temps 70% poids d'une poudre de SiC dont les grains présentent un diamètre médian d50 de 10 microns, avec une deuxième poudre de SiC dont les grains présentent un diamètre médian d₅₀ de 0,5 micron. Au sens de la présente description, on désigne par diamètre médian de pore d₅₀ le diamètre des particules tel que respectivement 50% de la population totale des grains présente une taille inférieure à ce diamètre. A ce mélange est ajouté un porogène du type polyéthylène dans une proportion égale à 5% poids du poids total des grains de SiC et un additif de mise en forme du type methylcellulose dans une proportion égale à 10% poids du poids total des grains de SiC.

On ajoute ensuite la quantité d'eau nécessaire et on malaxe jusqu'à obtenir une pâte homogène dont la plasticité permet l'extrusion à travers une filière configurée pour l'obtention de blocs monolithes de section carrée de 35,8mm de coté, de longueur 152,4mm et dont les canaux internes présentent une structure telle que représentée schématiquement en figure 1, ses caractéristiques étant regroupées dans le tableau 1. Ces caractéristiques dont similaires à l'exemple 3 de l'exemple 3 de WO 2007/088307.

Les monolithes crus obtenus sont séchés par micro-onde pendant un temps suffisant pour amener la teneur en eau non liée chimiquement à moins de 1% en masse. Les canaux de chaque face du monolithe sont alternativement bouchés selon des techniques bien connues, par exemple décrites dans la demande WO 2004/065088. Les monolithes (éléments) sont ensuite cuits sous argon selon une montée en température de 20°C/heure jusqu'à atteindre une température maximale de 2200°C qui est maintenue pendant 6 heures. Le matériau poreux obtenu, présente une porosité ouverte de 47% et un diamètre médian de pores de l'ordre de 15 micromètres, tel que mesurés par porosimétrie mercure.

Un filtre assemblé est ensuite formé à partir des monolithes. Seize éléments issus d'un même mélange ont été assemblés entre eux selon les techniques classiques par collage au moyen d'un ciment de composition chimique suivante : 72% poids de SiC, 15% poids d'Al₂O₃, 11% poids de SiO₂, le reste étant constitué par des impuretés, majoritairement de Fe₂O₃ et d'oxydes de métaux alcalins et alcalino-terreux. L'épaisseur moyenne du joint entre deux blocs voisins est de l'ordre de 1,2 mm. L'ensemble est ensuite usiné, afin de constituer des filtres assemblés de forme cylindrique d'environ 14,4 cm de diamètre. Un ciment de même composition que le ciment de joint est déposé à la périphérie du filtre usiné, avec une épaisseur de 1,3 mm.

### Exemple 2 (selon US 2005/235622) :

La technique de synthèse des monolithes décrite précédemment est reprise à l'identique, mais la filière est cette fois adaptée de manière à réaliser des blocs monolithes se caractérisant par une géométrie du type de celle décrite dans la demande US 2005/235622, telle que schématisée en figure 2 et dont les caractéristiques sont également reportées dans le tableau 1.

### Exemple 3 (selon WO2005/016491) :

La technique de synthèse des monolithes décrite dans l'exemple 1 est reprise à l'identique, mais la filière est cette fois adaptée de manière à réaliser des blocs monolithes se caractérisant par une géométrie du type de celle représentée schématiquement en figure 3 et dont les caractéristiques sont présentées dans le tableau 1.

Les portions présentent des canaux de géométrie « wavy » conformément à l'enseignement de la demande WO2005/016491. La portion centrale présente des canaux avec un rapport Rₐ de l'OFA des canaux d'entrée sur l'OBA des canaux de sortie égal à 1,94 et un diamètre hydraulique (Dh) d'environ 1,19 mm.

Par diamètre hydraulique d'un canal on entend dans la présente description le rapport entre quatre fois la section du canal et le périmètre dudit canal.

La portion périphérique présente des canaux avec un rapport Ra de l'OFA des canaux d'entrée sur l'OBA des canaux de sortie égal à 3,18 et un diamètre hydraulique d'environ 0,985 mm.

De façon non conforme à la présente invention, le rapport OFA/SF de la portion centrale des blocs est différent de celui de la portion périphérique.

### Exemple 4 (selon l'invention) :

La technique de synthèse des monolithes décrite dans l'exemple 1 est reprise à l'identique, mais la filière est cette fois adaptée de manière à réaliser des blocs monolithes se caractérisant par une géométrie du type de celle représentée schématiquement en figure 4 et dont les caractéristiques sont présentées dans le tableau 1.

Les portions présentent également des canaux de géométrie ondulés ou « wavy » conformément à l'enseignement de la demande WO2005/016491. La portion centrale présente des canaux avec un rapport Rₐ de l'OFA des canaux d'entrée sur l'OBA des canaux de sortie égal à 2,81 et un diamètre hydraulique d'environ 1,01 mm. La portion périphérique présente des canaux un rapport Ra de l'OFA des canaux d'entrée sur l'OBA des canaux de sortie égal à 2,23 et un diamètre hydraulique d'environ 1,15 mm.

De façon conforme à la présente invention, le rapport OFA/SF de la portion centrale des blocs est égal à celui de la portion périphérique.

Les filtres selon les exemples 1 à 4 précédents ont été testés selon les protocoles expérimentaux suivants :

### Essais de régénérations :

Les filtres selon les exemples 1 à 4 ont été montés sur une ligne d'échappement d'un moteur 2.0 L diesel à injection directe mis en marche à pleine puissance (4000 tr/minutes) pendant 30 minutes puis démontés et pesés afin de déterminer leur masse initiale. Les filtres sont ensuite remontés sur banc moteur avec un régime à 3000 tr/min et un couple de 50 Nm pendant une durée aboutissant à une charge finale en suies de 7 g/litre de filtre (phase de chargement). Les filtres ainsi chargés sont remontés sur la ligne pour être soumis à un régime moteur de 4000 tours/minute pendant 30 minutes afin d'éliminer les suies (phase de régénération active selon SAE 2004-01-0158). Les filtres sont ensuite pesés pour suivre l'évolution de leur masse.

Ce cycle de chargement et d'élimination des suies est réalisé plusieurs fois dans les mêmes conditions de manière à obtenir un vieillissement accéléré et un niveau de résidus équivalent de l'ordre de 150ml, soit 60 g de résidus.

Les filtres ont été découpés et une hauteur moyenne de résidus en fond de filtre a été reportée dans le tableau 2.

**Tableau 1**

| Exemple | 1 (comparatif) | | 2 (comparatif) | | 3 (comparatif) | | 4 (selon l'invention) | |
|---|---|---|---|---|---|---|---|---|
| Selon | Figure 1 | | Figure 2 | | Figure 3 | | Figure 4 | |
| Partie | Centrale | Périphérie | Centrale | Périphérie | Centrale | Périphérie | Centrale | Périphérie |
| Répartition en % de surface de section transversale des zones du bloc filtrant | 31 | 69 | 50 | 50 | 50 | 50 | 50 | 50 |
| Densité canaux (CPSI) | 180 | 350 | 118 | 76 | 170 | 170 | 170 | 170 |
| Section de mur (WALL) % de la portion de bloc | 36,9 | 34 | 34,9 | 28,5 | 34,9 | 28,6 | 34,9 | 28,6 |
| OFA (%) de la portion de bloc | 31,6 | 33 | 32,5 | 35,7 | 43 | 54,3 | 48 | 49,3 |
| OBA (%) de la portion de bloc | 31,6 | 33 | 32,5 | 35,7 | 22,1 | 17,1 | 17,1 | 22,1 |
| Ratio d'asymétrie Ra =OFA/OBA de la portion de bloc | 1,00 | 1,00 | 1 | 1 | 1,94 | 3,18 | 2,81 | 2,23 |
| Dh des canaux de sortie de la portion de bloc (mm) | 1,47 | 1,10 | 1,88 | 2,47 | 1,19 | 0,99 | 1.01 | 1,15 |
| SF =Surface de filtration spécifique (m²/litre) de la portion de bloc | 860 | 1199 | 690 | 579 | 880 | 954 | 908 | 926 |
| Ratio OFA/SF×1000 (%/m²/litre) de la portion de bloc centrale (Rc) ou périphérique (Rp) | Rc = 0,37 | Rp = 0,27 | Rc = 0,47 | Rp = 0,46 | Rc = 0,49 | Rp = 0,57 | Rc = 0,53 | Rp = 0,53 |
| Rapport Rc/Rp | 1,33 | | 0,76 | | 0,86 | | 1 | |

**Tableau 2**

| | Exemple 1 | | Exemple 2 | | Exemple 3 | | Exemple 4 | |
|---|---|---|---|---|---|---|---|---|
| Partie | Centrale | périphérie | Centrale | périphérie | Centrale | périphérie | Centrale | périphérie |
| Hauteur de résidus (mm) | 28,9 | 35,2 | 35,5 | 28,5 | 24,7 | 20,4 | 21,6 | 23 |
| Ecart moyen de hauteur des résidus entre parties centrale et périphérique | 22% | | -20% | | -17,3% | | 6% | |

### Analyse des résultats:

Les résultats d'essai d'accumulation de résidus montrent que seule la structure de l'exemple 4, se caractérisant selon l'invention par :
- une portion centrale dont la capacité calorifique volumique est supérieure à la portion périphérique et
- un ratio OFA/surface spécifique de filtration sensiblement constant dans tout le volume du bloc monolithe,
présente une répartition radiale en résidus sensiblement homogène. Au contraire, tel que représenté schématiquement sur la figure 5 à partir des résultats reportés dans le tableau 2, les structures antérieures selon les exemples 1 à 3 se caractérisent par une forte hétérogénéité de distribution des résidus entre la partie centrale des blocs unitaires et leur périphérie.

En conséquence, une réduction du gradient thermique entre la partie centrale et la partie périphérique en particulier en amont de la zone d'accumulation des résidus peut être mesurée par rapport à la direction des gaz d'échappement à filtrer. Cela se traduit par une réduction des contraintes thermomécaniques, notamment dans la période de fin de vie du filtre, ce qui renforce fortement la fiabilité du dispositif de dépollution.

## Revendications

1. Filtre pour le traitement d'un gaz chargé en particules de suies et de polluants en phase gazeuse, comprenant une pluralité de blocs monolithiques en nid d'abeille reliés entre eux par un ciment de joint dont la conductivité thermique est supérieure à 0,1 W/m.K, lesdits blocs comprenant un ensemble de canaux adjacents d'axes parallèles entre eux séparés par des parois poreuses, lesquels canaux étant obturés par des bouchons à l'une ou l'autre de leurs extrémités pour délimiter des conduits d'entrée s'ouvrant suivant une face d'admission des gaz et des conduits de sortie s'ouvrant suivant une face d'évacuation des gaz, de telle façon que le gaz traverse les parois poreuses, ledit filtre **se caractérisant en ce qu'**au moins un bloc monolithique placé dans la partie centrale du filtre, de préférence l'ensemble des blocs monolithiques, présentent suivant une direction radiale une portion centrale dont la capacité calorifique est supérieure à la capacité calorifique d'une portion périphérique de même volume du ou desdits blocs, et **en ce que**, si on définit :
- **R_{c}** comme le ratio entre la surface d'ouverture sur le front avant de ladite portion centrale et la surface spécifique de filtration de ladite portion centrale et
- **Rₚ** comme le ratio entre la surface d'ouverture sur le front avant de ladite portion périphérique et la surface spécifique de filtration de ladite portion périphérique,
le rapport **R_{c}/Rₚ** est compris entre 0,9 et 1,1, de préférence compris entre 0,95 et 1,05, voire sensiblement égal à 1.

2. Filtre selon la revendication 1 dans lequel lesdites portions périphérique et centrale diffèrent en coupe transversale d'au moins un paramètre choisi parmi la densité de canaux, l'épaisseur des parois, le ratio d'asymétrie Rₐ des parois, le rayon de courbure dans les coins des conduits, la géométrie des canaux.

3. Filtre selon l'une des revendications 1 ou 2, dans lequel la densité de canaux de la portion centrale du ou desdits blocs est supérieure à la densité de canaux de la portion périphérique du ou desdits blocs.

4. Filtre selon la revendication 3, dans lequel l'épaisseur de paroi est sensiblement constante dans tout le volume du ou desdits blocs et dans lequel le ratio d'asymétrie Ra des parois de la portion centrale du ou desdits blocs est supérieur au ratio d'asymétrie Ra des parois de la portion périphérique.

5. Filtre selon l'une des revendications 1 ou 2, dans lequel la densité de canaux est sensiblement constante dans tout le volume du ou desdits blocs et dans lequel l'épaisseur des parois dans la portion centrale est supérieure à l'épaisseur des parois dans la portion périphérique.

6. Filtre selon la revendication 5, dans lequel le ratio d'asymétrie Rₐ des parois dans la portion centrale du bloc est supérieur au ratio d'asymétrie Rₐ dans la portion périphérique du bloc et dans lequel les parois sont de préférence ondulées.

7. Filtre selon l'une des revendications précédentes, dans lequel au moins une desdites portions présente, en coupe transversale, une ondulation, de telle façon que le taux d'asymétrie desdites parois, calculé comme le rapport entre la demi-longueur ou la demi-période sur l'amplitude maximale de ladite ondulation, soit compris entre 10% et 35%.

8. Filtre selon l'une des revendications précédentes, dans lequel les parois filtrantes des blocs constitutifs sont formés dans un matériau choisi parmi le carbure de Silicium, la cordiérite, l'alumine, le titanate d'aluminium, la mullite, le nitrure de silicium, les métaux frittés, un mélange silicium/carbure de silicium, ou l'un quelconque de leurs mélanges.

9. Filtre selon l'une des revendications 1 à 7, dans lequel lesdits blocs et le ciment de joint sont à base d'un même matériau céramique, préférentiellement à base de carbure de silicium SiC.

10. Filtre selon l'une des revendications précédentes, dans lequel le ciment de joint présente une conductivité thermique comprise entre 0,3 et 20 W/m.K de préférence entre 1 et 5 W/m.K.

11. Filtre selon l'une des revendications précédentes, comprenant au moins deux zones distinctes avantageusement concentriques, ladite portion centrale étant comprise dans ladite première zone et ladite portion périphérique étant comprise dans ladite seconde zone.

12. Filtre selon la revendication précédente dans lequel le rapport de la surface d'une zone centrale sur la surface d'une zone périphérique est compris entre 0,05 et 4.

13. Filtre selon l'une des revendications 1 à 12, dans lequel l'augmentation de la capacité calorifique est graduelle de la périphérie vers le centre du ou desdits blocs.

14. Filière d'extrusion conformée de manière à former, par extrusion d'une matière céramique, un bloc monolithique pourvu de canaux convenant à la fabrication d'un filtre selon l'une des revendications précédentes.
